**Europäisches Patentamt**

**European Patent Office**

**Office européen des brevets**

(19)

(11) Veröffentlichungsnummer: **0 141 802**
A2

(12) **EUROPÄISCHE PATENTANMELDUNG**

(21) Anmeldenummer: **84890173.2**

(22) Anmeldetag: **20.09.84**

(51) Int. Cl.⁴: **B 01 D 53/34**, B 01 D 53/08

(30) Priorität: 07.10.83 AT 3589/83
14.05.84 AT 1579/84

(43) Veröffentlichungstag der Anmeldung: **15.05.85**
**Patentblatt 85/20**

(84) Benannte Vertragsstaaten: **BE DE FR GB IT LU NL SE**

(71) Anmelder: **VOEST-ALPINE Aktiengesellschaft,
Friedrichstrasse 4, A-1011 Wien (AT)**

(72) Erfinder: **Janusch, Alois, Dipl.-Ing., Theodoraweg 1,
A-8706 Leoben (AT)**
Erfinder: **Hans, Walter, Burggasse 12,
A-8652 Kindberg-Aumühl (AT)**
Erfinder: **Faltejsek, Karl, Dipl.-Ing.,
Lüfteneggerstrasse 6, A-4020 Linz (AT)**

(74) Vertreter: **Haffner, Thomas M., Dr. et al,
Patentanwaltskanzlei Dipl.-Ing. Adolf Kretschmer Dr.
Thomas M. Haffner Schottengasse 3a, A-1014 Wien (AT)**

(54) **Verfahren zum Entfernen von Schwefel oder Schwefelverbindungen und/oder anderen Schadstoffen aus heissen Gasen, sowie Vorrichtung zu Durchführung dieses Verfahrens.**

(57) Zum Entfernen von Schwefel oder Schwefelverbindungen und/oder anderen Schadstoffen aus heissen Gasen wird vorgeschlagen, diese heissen Gase durch einen Reaktor (2) zu leiten, in welchem beschichtete Körper (5) mit ungefähr einheitlicher Grösse als stehende Säule bzw. Schüttung enthalten sind. Die beschichteten Körper tragen eine Beschichtung aus Feststoffen und werden nach einer vorgegebenen Zeit aus dem Reaktor (2) ausgebracht, worauf die Beschichtung abgeschält wird. Anschliessend erfolgt eine neuerliche Beschichtung mit die Schadstoffe bindendem Material, worauf die beschichteten Körper (5) neuerlich oben auf den Reaktor (2) aufgegeben werden. Die Durchflussrate der Teilchen, die Art der Beschichtung und das Mengenverhältnis unterschiedlich beschichteter Körper (5) zueinander werden in Abhängigkeit von der Abgaszusammensetzung einer Regelung unterworfen.

- 1 -

Verfahren zum Entfernen von Schwefel oder Schwefelverbindungen und/oder anderen Schadstoffen aus heißen Gasen, sowie
Vorrichtung zur Durchführung dieses Verfahrens

Die Erfindung bezieht sich auf ein Verfahren zum Entfernen
von Schwefel oder Schwefelverbindungen und/oder anderen
Schadstoffen aus heißen Gasen, sowie auf eine Vorrichtung zur
Durchführung dieses Verfahrens.

Für die Entschwefelung von Gasen ist es bisher bekannt
geworden, die Gase nach einer entsprechenden Entstaubung und
Abkühlung durch Laugung auf nassem Wege zu reinigen. Derartige Verfahren sind nur mit großem technischen Aufwand und
hohen Kosten anwendbar. Es ist weiters Stand der Technik,
heißen Gasen Schwefel durch Beimengen von Metalloxiden,
insbesondere Kalziumoxiden bzw. -karbonaten, zu entziehen.
Reduzierende Gase, wie sie beispielsweise als metallurgische
Reduktionsgase, Synthesegase oder Brenngase Verwendung
finden, fallen bei hohen Temperaturen und unter relativ hohem
Druck an. Eine Abkühlung stellt einen unerwünschten Energieverlust dar, da reduzierende Gase mit den hohen Temperaturen
in einfacher Weise z.B. als Brenngase eingesetzt werden
können. Die Energiebilanz ist in diesem Falle naturgemäß
besser, wenn die heißen reduzierenden Gase mit ihrer fühlbaren Wärme in Brennkammern eingeführt werden können. Auch
bei nachfolgender Verwendung der heißen reduzierenden Gase zu
metallurgischen Reduktionsvorgängen ist es wünschenswert, die
Temperatur der heißen Reduktionsgase so wenig wie nur möglich
herabzusetzen. Abgase von Kraftwerken oder Müllverbrennungsanlagen enthalten neben schwefelhältigen Schadstoffen auch
weitere flüchtige Schadstoffe, wie Chlor, Fluor, Brom, Arsen
oder Stickoxide. Derartige Abgase fallen zumeist bei geringeren Temperaturen als die zuvor genannten reduzierenden
Abgase an, wobei es sich zumeist um oxidierende Gase handelt.

Bei den bekannten Verfahren war eine aufwendige Rauchgaskühlung erforderlich, bevor eine Entschwefelung bzw. Beseitigung von flüchtigen Schadstoffen möglich war.

Aus der GB-PS 157 845 ist bereits ein Verfahren der eingangs genannten Art bekannt geworden, bei welchen Teilchen in Flüssigkeit getaucht und im freien Fall durch zu reinigende Gase geführt werden. Bei höheren Temperaturen verdunstet jedoch eine derartige Flüssigkeit und zusätzlich zu der in diesem Fall erforderlichen Abkühlung des Abgases sorgen die jeweils frisch zuzuführenden, frei fallenden Teilchen für eine weitere Abkühlung der Gase. Bei höheren Temperaturen führt die Viskositätsabnahme der Flüssigkeit zu einem Abtropfen, zu einer Anreicherung der Flüssigkeit im Behandlungsraum und schließlich zu Verdunstung und neuerlicher Abgasbelastung.

Die Erfindung zielt nun darauf ab, ein apparativ einfaches Verfahren zu schaffen, mit welchem ohne nennenswerte Modifikationen eine große Zahl von in ihrer chemischen Analyse verschiedenen Abgasen ohne nennenswerte Abkühlung auf hohem Temperaturniveau gereinigt werden kann. Das erfindungsgemäße Verfahren zielt hiebei vor allem darauf ab, bei sich ändernder Abgaszusammensetzung kurzfristig und ohne anlagentechnische Änderungen der neuen Zusammensetzung der Abgase entsprechend eine vollständige Reinigung zu erzielen. Zur Lösung dieser Aufgabe besteht die Erfindung im wesentlichen darin, daß die heißen Gase nach einem Entstauben, durch eine Schüttung von Körpern ungefähr einheitlicher Größe aus hitzebeständigem und verschleißfestem Material, deren Oberfläche mit einer Beschichtung aus Feststoffen überzogen ist, welche eine große Affinität zu Schwefel und/oder zu den Schadstoffen aufweist, hindurchgeführt werden, daß die beschichteten Körper im Kreislauf geführt werden, wobei nach ihrem Ausbringen aus der Kontaktzone mit den heißen Gasen die Beschichtung zumindest teilweise von den Körpern mechanisch oder chemisch abgelöst wird und die Körper nach einer neuerlichen Beschichtung wieder der Schüttung zugeführt werden. Die Ausbildung der Beschichtung mit Feststoffen erlaubt es, zum Unterschied von flüssigen Beschichtungen, längere Verweilzeiten und ein höheres Temperaturniveau in der nahezu stehenden Säule der Schüttung zuzulassen. Ebenso dient die Schüttung, zum Unterschied von im freien Fall geführten Teilchen, dieser Erhaltung eines Temperaturniveaus, welche es ermöglicht, die Reinigung der Gase ohne nennenswerte Abkühlung der zu reinigenden Gase vorzunehmen. Das Entstauben kann hiebei durch Zyklone, Elektrofilter oder anderen Staubabscheidungsvorrichtungen erfolgen, bevor die heißen Gase einem Reaktionsschacht zugeführt werden. Dadurch, daß eine Schüttung von Körpern ungefähr einheitlicher Größe eingesetzt wird, läßt sich ein relativ geringer Strömungswiderstand auch bei höheren Temperaturen sicherstellen. Die Körper, ungefähr einheitlicher Größe bieten hiebei eine relativ große Oberfläche für eine entsprechende Beschichtung, welche zur Reaktion mit den Schadstoffen herangezogen wird. Die Umsetzung mit den Schadstoffen erfolgt hiebei an der Oberfläche der Beschichtung, und dadurch, daß diese Beschichtung mechanisch oder chemisch abgelöst wird, kann eine entsprechende Aufarbeitung der Verbindungen der Schadstoffe mit dem Material der Beschichtung angeschlossen werden. Die von ihrer Beschichtung großteils befreiten Körper werden einer neuerlichen Beschichtung unterworfen, wobei durch Wahl der geeigneten Reagenzien für das Material dieser Beschichtung kurzfristig Änderungen in der Analyse der zu reinigenden Abgase Rechnung getragen werden kann.

Das Ausmaß der Reinigung läßt sich in einfacher Weise durch Änderung der Höhe der Beschickung einstellen. Das Material für die Beschichtung der Körper kann den jeweiligen Umständen angepaßt werden. Mit Rücksicht auf die Stabilität der als Träger wirkenden Körper wird auch bei mechanisch weniger stabilen Beschichtungen immer eine entsprechend große Oberfläche für die Umsetzung mit den Schadstoffen in den Abgasen sichergestellt.

Das Verfahren ist in gleicher Weise bei der Entschwefelung bzw. Beseitigung von Schadstoffen aus oxidierenden wie aus reduzierenden Gasen durchführbar. Die Hitzebeständigkeit des Trägermaterials der Körper muß lediglich den zur erwartenden Temperaturen angepaßt sein und die mechanische Festigkeit bzw. Verschleißfestigkeit muß ausreichen, um das mehrfache Ablösen der Beschichtung sowie das mehrfache neuerliche Beschichten zu ermöglichen. Für diese Zwecke sind eine Reihe von feuerfesten Materialien geeignet und es können auch metallische Grundkörper ohne weiteres Verwendung finden.

Bei der Aufarbeitung der mit Schadstoffen beladenen Beschichtung können die Schwefelverbindungen, beispielsweise zu $SO_2$, verbrannt werden. Für andere Schadstoffe stehen eine Reihe von entsprechenden pyrochemischen oder naßchemischen Aufarbeitungsverfahren zur Verfügung, wobei die Konzentration dieser Schadstoffe in bzw. an der Beschichtung eine hinreichende Anreicherung dieser Schadstoffe sicherstellt, welche eine wirtschaftliche Aufarbeitung ermöglicht.

Um einem weiten Bereich verschiedener Schadstoffe Rechnung tragen zu können, besteht die Beschichtung der Körper vorzugsweise aus Alkali- und/oder Erdalkali- und/oder Eisenoxiden und/oder -hydroxiden und/oder -karbonaten. Weiters können katalytisch wirkende Zusätze Verwendung finden. Mit derartigen Beschichtungen ist es möglich, verschiedenste Schwefelverbindungen aber auch andere flüchtige Schadstoffe, wie Chlor, Fluor, Brom, Arsen oder Stickoxide abzubinden. Zur Verstärkung der absorbierenden Wirkung der Trägersubstanz können dieser gegebenenfalls katalytisch wirkende Stoffe beigemischt werden. In reduzierender Atmosphäre, wie sie beispielsweise bei Konverterabgasen unter hohen Temperaturen anfällt, ist eine Beschichtung aus Kalziumoxid und Kalziumhydroxid mit einem entsprechenden Katalysator, wie beispielsweise Eisenoxid besonders bevorzugt.

Im Rahmen des erfindungsgemäßen Verfahrens werden die Körper in Form von Kugeln oder Pellets bevorzugt eingesetzt.

Um bei sich ändernder Abgaszusammensetzung kurzfristig und ohne anlagentechnische Änderungen der neuen Zusammensetzung der Abgase entsprechend eine vollständige Reinigung zu erzielen wird vorzugsweise so vorgegangen, daß die Zusammensetzung und Konzentration der Schadstoffe in der Zuleitung und der Ableitung des Reaktors kontinuierlich überwacht wird und die gemessenen Werte mit einer Sollwertvorgabe verglichen werden, wobei bei Überschreiten der Sollwertvorgabe die Durchlaufgeschwindigkeit der beschichteten Körper durch den Reaktor erhöht wird. Dadurch, daß nun die Zusammensetzung und Konzentration der Schadstoffe vor und nach dem Reaktor als Kriterium für die Regelung der Durchlaufgeschwindigkeit der Beschickung des Reaktors herangezogen wird, läßt sich auch eine kurzfristige Anpassung an die Erfordernisse bei maximaler Ausnutzung der Reaktivität der Beschichtung verwirklichen.

Das Ausmaß der Reinigung läßt sich in einfacher Weise durch Änderung der Höhe der Beschickung einstellen. Das Material für die Beschichtung der Körper kann den jeweiligen Umständen angepaßt werden. Mit Rücksicht auf die Stabilität der als Träger wirkenden Körper wird auch bei mechanisch weniger stabilen Beschichtungen immer eine entsprechend große Oberfläche für die Umsetzung mit den Schadstoffen in den Abgasen sichergestellt.

In weiterer Ausgestaltung der Erfindung kann die Anpassung an verschiedene Schadstoffe dadurch verbessert werden, daß die Meßwerte für verschiedene Schadstoffe jeweils einem für jeden Schadstoff oder eine Gruppe von Schadstoffen gesonderten Vergleich mit einer entsprechenden Sollwertvorgabe unterworfen werden und daß die Durchlaufgeschwindigkeiten der den jeweiligen Schadstoffen bzw. Schadstoffgruppen entsprechenden beschichteten Teilchen in Abhängigkeit von den Meßwerten gesondert geregelt werden.

Die erfindungsgemäße Vorrichtung zur Durchführung dieses Verfahrens ist im wesentlichen gekennzeichnet durch einen mit beschichteten Körpern füllbaren temperaturfesten Reaktor, an dessen einer Seite eine Zuführungsleitung für die heißen Gase angeschlossen und eine Austragsöffnung für die beschichteten Körper angeordnet ist und an dessen dieser Seite abgewendeter Seite eine Abführungsleitung für die heißen Gase angeschlossen sowie eine Aufgabeöffnung für die beschichteten Körper vorgesehen ist und eine Einrichtung zum Abtrennen der Beschichtung der Körper, deren Aufgabeseite mit der Austragsöffnung des temperaturfesten Reaktors und deren Austragsseite mit einer Beschichtungsvorrichtung für das neuerliche Beschichten der Körper verbunden ist, wobei der Auslaß der Beschichtungsvorrichtung mit der Aufgabeöffnung des Reaktors mittelbar oder unmittelbar verbunden werden kann. Mit einer derartigen Vorrichtung ist es ohne weiteres möglich, die beschichteten Körper, sowie die zu reinigenden heißen Gase im Gegenstrom zu führen, wobei durch die große Gasdurchlässigkeit der Schüttung eine nennenswerte Temperaturabsenkung der heißen Abgase vermieden wird. Hiebei ist in vorteilhafter Weise die Beschichtungsvorrichtung von wenigstens einer, vorzugsweise mehreren, parallelgeschalteten Beschichtungstrommel(n) gebildet. Durch die Maßnahme, mehrere Beschichtungstrommeln vorzusehen, läßt sich der Anteil von Körpern, welche eine von anderen Körper verschiedene Beschichtung tragen, in weitem Maße steuern und es lassen sich spezifische Beschichtungen, welche für jeweils einzelne der in den Abgasen enthaltenen Schadstoffe wirksam werden, in der für die Bindung des jeweiligen Anteils an diesen Schadstoffen erforderlichen Menge dem ersten Reaktor zurückführen.

Vorzugsweise ist die Einrichtung zum Abtrennen der Beschichtung als Abreibtrommel oder Schältrommel ausgebildet. In derartigen Abreibtrommeln werden die beschichteten Körper in Anwesenheit von Schleifkörpern oder an scharfen Kanten von Schälmessern von ihrer Beschichtung befreit. Die Grundkörper ohne diese Beschichtung werden anschließend wiederum der Beschichtungsanlage zugeführt und mit neuen Beschichtungen versehen, in den Reaktor rückgeführt.

Die in der Trommel entfernte Beschichtung mit den gebundenen Schadstoffen kann in besonders einfacher Weise abgesaugt werden und in einem Zyklon- bzw. Staubfilter ausgeschieden werden.

In besonders vorteilhafter Weise ist die Ausbildung so getroffen, daß der temperaturfeste Reaktor langgestreckt ausgebildet und im wesentlichen vertikal angeordnet ist, wobei die Aufgabeöffnung für die beschichteten Körper nahe dem oberen Ende und die Zuführungsleitung für die zu reinigenden heißen Gase nahe dem unteren Ende angeordnet sind. Bei einer derartigen Ausbildung wird die geringe zwischen Eingang und Ausgang des ersten Reaktors bzw. Reaktionsschachtes bestehende Temperaturdifferenz für eine gerichtete Strömung ausgenützt, da die heißen Abgase nach oben strömen. Eine derartige Ausbildung ist insbesondere bei geringem Druck der zu reinigenden heißen Gase besonders vorteilhaft.

Für die Reinigung von heißen Gasen, welche unter höherem Druck anfallen, ist die Ausbildung vorzugsweise so getroffen, daß der temperaturfeste Reaktor druckfest ausgebildet ist, wobei in besonders einfacher Weise in die Abführleitung des temperaturfesten Reaktors ein regelbares Abzugsorgan eingeschaltet sein kann. Durch eine derartige Ausbildung kann bei entsprechender Drosselung in der Abführungsleitung eine hinreichende Verweilzeit der zu reinigenden Abgase im Reaktionsschacht sichergestellt werden, wodurch sich die baulichen Maße des Reaktionsschachtes bzw. des temperaturfesten Reaktors wesentlich verringern lassen.

Zur rascheren Anpassung an sich ändernde Abgaszusammensetzungen wird diese Vorrichtung mit Vorteil dahingehend weitergebildet, daß an oder in der Zuführungsleitung für die heißen Gase zu einem Reaktor und an oder in der Ableitung vom Reaktor wenigstens je ein Sensor für die Erfassung der Gaszusammensetzung angeschlossen ist, daß die Signale der Sensoren einer Auswerteschaltung und einem Komparator zugeführt sind, daß eine Abfördereinrichtung und wenigstens eine Zufördereinrichtung für die beschichteten Körper vorgesehen ist und daß eine mit dem Komparator verbundene Steuerschaltung mit dem Antrieb der Abförder- und/oder Zufördereinrichtungen verbunden ist. Durch eine derartige Ausbildung werden die Voraussetzungen für eine vollautomatisierte Regelung der Schadstoffentfernung geschaffen.

In vorteilhafter Weise ist die Beschichtungsvorrichtung von wenigstens einer, vorzugsweise mehreren, parallelgeschalteten Beschichtungstrommel(n) gebildet. Durch die Maßnahme, mehrere Beschichtungstrommeln vorzusehen, läßt sich der Anteil von Körpern, welche eine von anderen Körper verschiedene Beschichtung tragen, in weitem Maße steuern und es lassen sich spezifische Beschichtungen, welche für jeweils einzelne der in den Abgasen enthaltenen Schadstoffe wirksam werden, in der für die Bindung des jeweiligen Anteils an diesen Schadstoffen erforderlichen Menge dem Reaktor zurückführen. Hiefür wird erfindungsgemäß vorgeschlagen, daß wenigstens zwei Zufördereinrichtungen für mit unterschiedlicher Beschichtung beschichtete Körper vorgesehen sind, welche gesondert schaltbar mit der Steuerschaltung verbunden sind, wobei vorzugsweise die Zu- und/oder Abfördereinrichtungen mit einstellbarer Förderleistung ausgebildet sind.

Die Erfindung wird nachfolgend anhand eines in der Zeichnung schematisch dargestellten Ausführungsbeispieles näher erläutert.

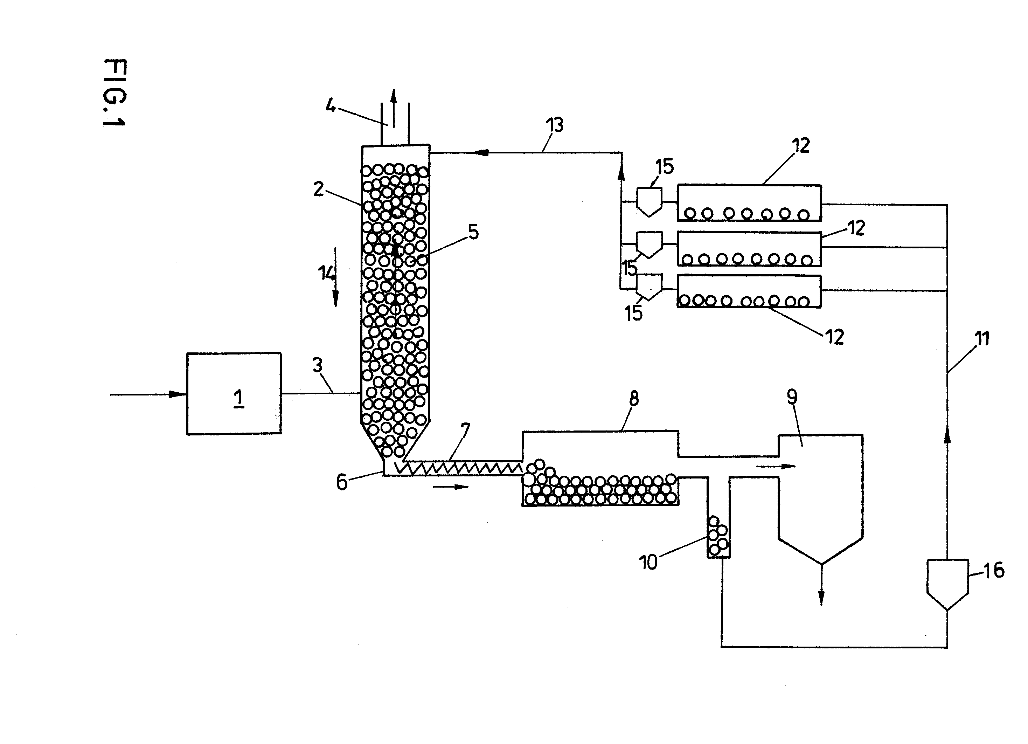

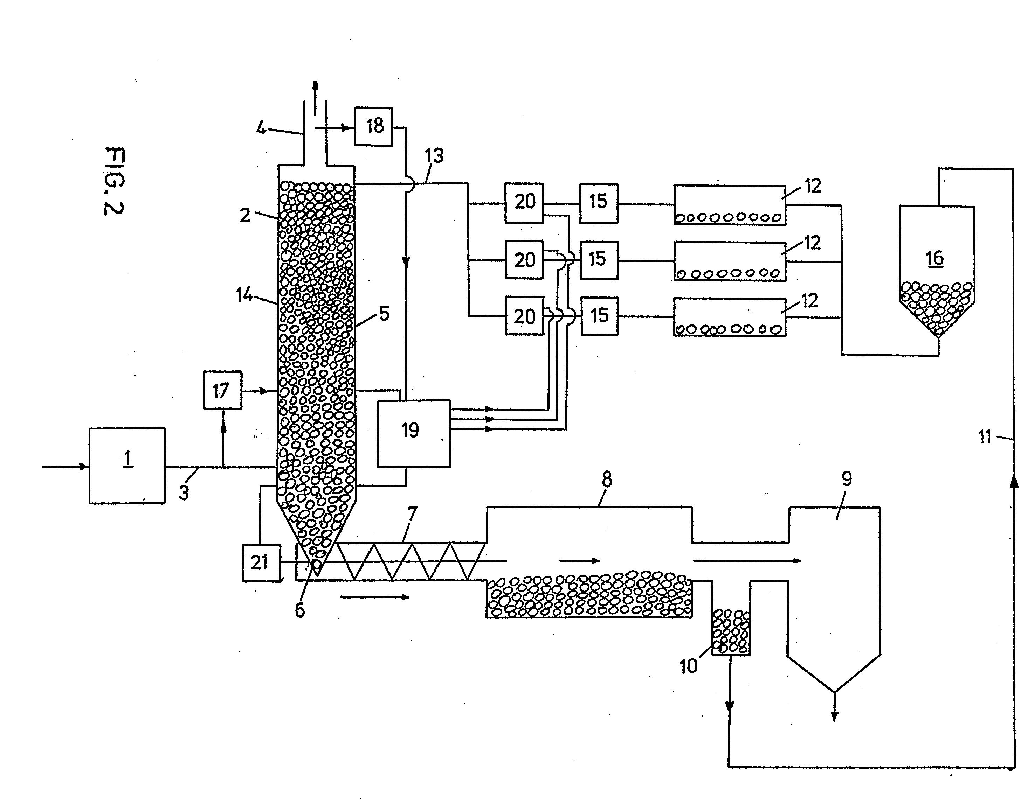

In dieser zeigen Fig. 1 eine erste schematische Darstellung der erfindungsgemäßen Einrichtung und Fig. 2 eine abgewandelte Ausführungsform mit ergänzenden Einrichtungen für eine kontinuierliche Erfassung der Gaszusammensetzung und eine entsprechende Regelung der einzusetzenden Beschichtung.

In der Zeichnung ist mit 1 ein Elektrofilter bezeichnet, mit welchem die Abtrennung von Staub aus zu reinigenden Abgasen auf elektrostatischem Wege möglich ist. Mit 2 ist ein Reaktor bezeichnet, welchem die zu reinigenden heißen Gase über eine Leitung 3 zugeführt werden. Die gereinigten heißen Gase treten über einen Schacht 4 aus und können, insbesondere wenn es sich um reduzierende heiße Gase handelt, einer weiteren Verwendung, beispielsweise einer Verbrennung, zugeführt werden.

Am unteren Ende des mit kugelförmigen beschichteten Körpern 5 beschickten Reaktors 2 ist eine Austragsöffnung 6 vorgesehen, aus welcher über eine Förderschnecke 7 die beschichteten Teilchen abgezogen werden. Die beschichteten Teilchen wandern innerhalb des Reaktors 2 im Sinne des Pfeiles 14 entgegen der Strömung der zu reinigenden Gase.

Nach ihrem Ausbringen werden die beschichteten Körper einer Abreibtrommel 8 zugeführt, in welcher die verbrauchte Beschichtung in Gegenwart von Reibkörpern abgeschliffen wird. Die Beschichtung wird durch eine Staubabsaugung und Staubabscheidungseinrichtung 9 ausgebracht und kann nach ihrer Abtrennung einer gesonderten Verwertung bzw. Aufarbeitung zugeführt werden. Die von ihrer Beschichtung weitgehend befreiten Teilchen gelangen über einen Schacht 10 in eine Rückführungsleitung 11. Es sind vor dem Rückführen dieser nunmehr von ihrer Beschichtung befreiten Körper drei Beschichtungstrommeln 12 parallel zueinander vorgesehen. In die Zuführungs- bzw. Abführungsleitungen dieser parallel zueinander angeordneten Beschichtungstrommeln können entsprechend der Gaszusammensetzung regelbare Dosiervorrichtungen eingebaut sein, um das Verhältnis der den einzelnen Beschichtungstrommeln 12 zugeführten neuerlich zu beschichteten Körper einzustellen.

In den Beschichtungstrommeln können verschiedene Arten der Beschichtungen vorgenommen werden und es lassen sich Beschichtungen beispielsweise aus Kalziumoxid, Kalziumhydroxid, Eisenoxid, Natriumkarbonat oder anderen Stoffen, welche mit den Schadstoffen reagieren können, erzielen. Die neuerlich beschichteten Körper werden über eine Leitung 13 am oberen Ende des Reaktors 2 wiederum zugeführt und durchwandern diesen Reaktor 2 im Sinne des Pfeiles 14 zur neuerlichen Bindung von $SO_2$, $H_2S$, Chlor, Fluor, $NO_x$ oder ähnlichen Schadstoffen.

In die Leitung 11 ist ein Sammelbunker 16 eingeschaltet. Für die leichtere Dosierung der jeweils beschichteten Teilchen sind Zwischenbunker 15 vorgesehen.

Bei der Ausbildung nach Fig. 2 sind zusätzlich zu den in Fig. 1 erläuterten Einrichtungen in der Zuführungsleitung 3 zum Reaktor und in die Abführungsleitung 4 vom Reaktor kontinuierlich arbeitende Schadstoffmeßgeräte 17 und 18 eingebaut. Die hier ermittelten Meßwerte werden registriert und einem Steuergerät 19 zugeführt, das laufend den im Gas verbliebenen Schadstoffanteil $a_1$ (%) mit der Sollwertvorgabe $a_s$ (%) vergleicht und die Drehzahl der Austragsschnecke, deren Motor mit 21 bezeichnet ist, sowie die Dosierung ansteuert. Die Zufördereinrichtungen sind hiebei mit 20 bezeichnet. Bei Vorhandensein eines Schadstoffes mit dem Gehalt $a_o$ (%) wird bei Überschreitung des Sollwertes $a_s$ (%),

der rd. 70 - 80 % des zulässigen Emissionswertes $a_2$ (%) beträgt, die Durchlaufgeschwindigkeit v der Kugelschüttung über eine Austragsschnecke erhöht. Gleichzeitig muß zum Konstanthalten der Höhe der Beschickung eine verstärkte Zudosierung von beschichteten Körpern aus dem Zwischenbunker 15 über die regelbare Dosiervorrichtung bzw. Zufördereinrichtung 20 erfolgen. Bei Einhaltung des Sollwertes $a_s$ bleibt die Durchlaufgeschwindigkeit v gleich, im Falle der Unterschreitung des Sollwertes $a_s$ (%) wird die Durchlaufgeschwindigkeit vermindert. Durch die Vorgabe, daß der Sollwert $a_s$ nur rd. 70 - 80 % des zulässigen Emissionswertes beträgt, ist im Reaktor eine Reserve an Schütthöhe gegeben, womit die Trägheit des Zuführsystems ausgeglichen wird.

Wenn das Abgas von mehreren Schadstoffkomponenten gereinigt werden soll und das Verhältnis der Schadstoffkomponenten zueinander festliegt bzw. geringfügig schwankt, können die Mengenanteile der beschichteten Körper dem Verhältnis der Schadstoffkomponenten angepaßt werden. Der Ausgleich der Konzentrationsänderung bei einer Schadstoffkomponente kann durch Änderung der Durchlaufgeschwindigkeit v über die Austragsschnecke erfolgen, wobei diese immer vom jeweils im Vergleich zur Sollvorgabe am schlechtesten liegenden Schadstoffanteil gesteuert werden muß. Der Nachteil dieser Regelmethode liegt darin, daß bei größeren Konzentrationsänderungen jene Körper, bei denen die Schadstoffkonzentration unter der Sollvorgabe liegt, schlecht ausgenützt werden.

Die Steuerung der Zudosierung der verschiedenen Arten von beschichteten Körpern erfolgt über die Durchlaufgeschwindigkeit v.

In diesen Fällen wird einer Konzentrationsänderung (Differenz des Schadstoffanteiles $a_1$ %, $b_1$ %, $c_1$ % im gereinigten Abgas zur Sollvorgabe $a_s$ %, $b_s$ %, $c_s$ % in besonders vorteilhafter Weise durch eine veränderte Dosierung der einzelnen Arten von

0141802

beschichteten Körpern Rechnung getragen. Diese Regelungsart setzt voraus, daß bei einer verstärkten Zudosierung von einzelnen Arten von beschichteten Körpern ein genügender Spielraum zur Erhöhung der Kugelschüttungshöhe im Reaktor gegeben ist. Andererseits kann, bedingt durch die längere Durchlaufstrecke im Reaktor, die Durchlaufgeschwindigkeit vergrößert werden.

Die verschiedenen Arten einer möglichen Regelung werden nachfolgend an Hand von Ausführungsbeispielen näher erläutert.

Beispiel 1:

Bei Berücksichtigung nur eines Schadstoffes erfolgt ein Ausgleich der Konzentrationsveränderung des Schadstoffes im Abgas durch Änderung der Durchlaufgeschwindigkeit v bei Vorhandensein eines Reaktorfüllvolumens, mit dem auch auftretende Schadstoffspitzen beherrscht werden können. Das vom Staub gereinigte Abgas wird zunächst einer Messung des Schadstoffanteiles $a_0$ (%) unterworfen. Die Reinigung erfolgt mit einer Geschwindigkeit v, wobei nach Abschluß des Reinigungsprozesses neuerlich der verbleibende Schadstoffanteil gemessen wird und als $a_1$ (%) eingesetzt wird. Hierauf erfolgt ein Vergleich $a_1$ mit der Sollvorgabe $a_s$ (%), welche dem vorgeschriebenen Emissionswert bzw. einem Wert darunter entspricht. Sobald eine Überschreitung des Sollwertes relativ zum nach dem Reinigungsprozeß gemessenen Schadstoffanteil $a_1$ festgestellt wird, wird die Durchlaufgeschwindigkeit der beschichteten Teilchen erhöht. Umgekehrt wird bei einer Unterschreitung des Sollwertes die Durchlaufgeschwindigkeit v der beschichteten Teilchen verringert. Bei exakter Einhaltung des Sollwertes erfolgt keine Veränderung der Durchlaufgeschwindigkeit der beschichteten Körper. Wenn die Reaktionszeit kurz im Vergleich zu den zeitlichen Schwankungen des Schadstoffanteiles liegt, kann das System sehr gut geregelt werden. Der Sollwert entspricht in der Regel 70 - 80 % des zulässigen Emissionswertes.

Beispiel 2:

Im Falle der Anwesenheit mehrerer Schadstoffe wird zunächst das Verhältnis der beschichteten Körper entsprechend einem durchschnittlichen Gehalt an Schadstoffen einmal festgelegt und konstant gehalten.

Der Ausgleich der Konzentrationsänderungen erfolgt wiederum durch Änderung der Durchlaufgeschwindigkeit.

Es wird wiederum wie in Beispiel 1 so vorgegangen, daß zunächst ein von Staub gereinigtes Abgas einer Messung der einzelnen Schadstoffanteile unterworfen wird, wobei für verschiedene Schadstoffkomponenten verschiedene Anteile ermittelt werden. Mit $a_0$ (%) wird der $SO_2$-Gehalt, mit $b_0$ (%) der $H_2S$-Gehalt und mit $c_0$ (%) der $NO_x$-Gehalt der Abgase bezeichnet. Nach der Reinigung, bei welcher die Durchlaufgeschwindigkeit v der beschichteten Körper geregelt werden kann, erfolgt wiederum eine Messung der verbliebenen Schadstoffanteile im austretenden Abgas. Es ergeben sich hiebei die Messwerte $a_1$, $b_1$ und $c_1$ jeweils in Prozent. Alle diese Werte werden gesondert mit der jeweiligen Sollvorgabe $a_s$, $b_s$ bzw. $c_s$ verglichen, wobei für alle diese Konzentrationen die vorgeschriebenen Emissionswerte $a_2$, $b_2$, $c_2$ jeweils in Prozent bekannt sind. Die Durchlaufgeschwindigkeit v der beschichteten Körper muß nun immer vom jeweils im Vergleich zur Sollvorgabe am schlechtesten liegenden Schadstoffanteil gesteuert werden. Bei dieser Vorgangsweise ergibt sich der Nachteil, daß ein schwankender Schadstoffanteil zur Nichtausnutzung eines Teiles der beschichteten Körper für diejenigen Schadstoffe liegt, welche vollständig entfernt werden können.

Beispiel 3:

Bei Anwesenheit mehrerer Schadstoffe erfolgt nunmehr der Ausgleich der Konzentrationsänderungen einzelner Schadstoffkomponenten durch Änderung der Dosierung der entsprechend beschichteten Körper. Hiebei bedeuten

$B_1$ [1/sec] Beschickung der beschichteten Körper gegen Schadstoff a

$B_2$ [1/sec] Beschickung der beschichteten Körper gegen Schadstoff b

$B_3$ [1/sec] Beschickung der beschichteten Körper gegen Schadstoff c

$B_1 + B_2 + B_3 = B$ ..... Beschickungssumme.

Die Durchlaufgeschwindigkeit der Kugelschüttung durch den Reaktor ist von der Beladezeit der beschichteten Körper abhängig, und zwar von jener, deren Beladung zeitlich am längsten dauert. Bei einer Erhöhung der Kugelschüttungshöhe im Reaktor kann daher die Durchlaufzeit verkürzt werden.

Für die Regelung wird nun wie folgt vorgegangen. Wenn ein Sollwert überschritten wird und somit $a_s < a_1$, wird die Dosis der Beschickung erhöht: $B_{1\,neu} = B_{1\,alt} + \Delta B_1$. Wenn der Sollwert unterschritten wird und $a_s > a_1$, wird die Dosis der Beschickung reduziert: $B_{1\,neu} = B_{1\,alt} - \Delta B_1$. Wenn der Sollwert eingehalten wird und damit $a_s = a_1$, bleibt auch die Dosis der Beschickung gleich: $B_{1\,neu} = B_{1\,alt}$.

Aus der entsprechenden Abfrage für die anderen Schadstoffe ergibt sich aus $B_{1\,neu} + B_{2\,neu} + B_{3\,neu} = B_{neu}$ die Gesamt-beschickung $B_{neu}$ und dadurch die Durchlaufzeit $t_{neu}$. Aus der Bezeichnung $t_{neu} = V/B_{neu}$ folgt die Durchlaufgeschwin-digkeit $v_{neu}$ und kann auf diese Weise geregelt werden.

Neben der Reinigung von schwefelhältigen oder anderen flüchtigen Schadstoffen, wie Chlor, Fluor und anderen, kann das

- 15 -

erfindungsgemäße Verfahren auch für die Reinigung von Gasen, von Fest-flüssig Aerosolen, Geruchsstoffen und anderen Stoffen herangezogen werden. Die Beschichtung der Körper wird dann entsprechend den abzuscheidenden Stoffen gewählt. Die Beseitigung der adsorptiv gebundenen Schadstoffe kann durch Ausdämpfen, Oxydation oder Ablösen mittels Lösungsmittel erfolgen. Anstelle der Abreibtrommel 8 werden in diesen Fällen geeignete Aggregate, wie z. B. Siebtrommeltrockner, eine Verbrennungsvorrichtung oder eine chemische Reinigung verwendet.

Als Material für weitere selektive Beschichtungen kommen in erster Linie $CaO$, $Na_2O$, $CaCO_3$, $Na_2CO_3$ sowie $MgO$ in Frage, wodurch sich $SO_2$, $HCl$, $HF$ und auch $NO_2$ gut abtrennen läßt. $MgO$ ist als Beschichtung für die Abtrennung von $NO_2$ aber nicht gut geeignet.

0141802

Patentansprüche:

1. Verfahren zum Entfernen von Schwefel oder Schwefelverbindungen und/oder anderen Schadstoffen aus heißen Gasen, dadurch gekennzeichnet, daß die heißen Gase nach einem Entstauben, durch eine Schüttung von Körpern (5) ungefähr einheitlicher Größe aus hitzebeständigem und verschleißfestem Material, deren Oberfläche mit einer Beschichtung aus Feststoffen überzogen ist, welche eine große Affinität zu Schwefel und/oder zu den Schadstoffen aufweist, hindurchgeführt werden, daß die beschichteten Körper (5) im Kreislauf geführt werden, wobei nach ihrem Ausbringen aus der Kontaktzone mit den heißen Gasen die Beschichtung zumindest teilweise von den Körpern (5) mechanisch oder chemisch abgelöst wird und die Körper (5) nach einer neuerlichen Beschichtung wieder der Schüttung zugeführt werden.

2. Verfahren nach Anspruch 1, dadurch gekennzeichnet, daß die Beschichtung aus Alkali- und/oder Erdalkali- und/oder Eisenoxiden und/oder -hydroxiden und/oder -karbonaten und/oder katalytisch wirkenden Zusätzen besteht.

3. Verfahren nach Anspruch 1 oder 2, dadurch gekennzeichnet, daß die Körper (5) von Kugeln oder Pellets gebildet sind.

4. Verfahren nach Anspruch 1, 2 oder 3, dadurch gekennzeichnet, daß die Zusammensetzung und Konzentration der Schadstoffe in der Zuleitung (3) und der Ableitung (4) des Reaktors kontinuierlich überwacht wird und die gemessenen Werte mit einer Sollwertvorgabe verglichen werden, und daß bei Überschreiten der Sollwertvorgabe die Durchlaufgeschwindigkeit der beschichteten Körper (5) durch den Reaktor erhöht wird.

5. Verfahren nach einem der Ansprüche 1 bis 4, dadurch gekennzeichnet, daß die Meßwerte für verschiedene Schadstoffe jeweils einem für jeden Schadstoff oder eine Gruppe von Schadstoffen gesonderten Vergleich mit einer entsprechenden Sollwertvorgabe unterworfen werden und daß die Durchlaufgeschwindigkeiten der den jeweiligen Schadstoffen bzw. Schadstoffgruppen entsprechenden beschichteten Teilchen (5) in Abhängigkeit von den Meßwerten gesondert geregelt werden.

6. Vorrichtung zur Durchführung des Verfahrens nach einem der Ansprüche 1, 2 oder 3, gekennzeichnet durch einen mit beschichteten Körpern (5) füllbaren temperaturfesten Reaktor (2), an dessen einer Seite eine Zuführungsleitung (3) für die heißen Gase angeschlossen und eine Austragsöffnung (6) für die beschichteten Körper (5) angeordnet ist und an dessen dieser Seite abgewendeten Seite eine Abführungsleitung (4) für die heißen Gase angeschlossen sowie eine Aufgabeöffnung für die beschichteten Körper (5) vorgesehen ist und eine Einrichtung (8) zum Abtrennen der Beschichtung der Körper (5), deren Aufgabeseite mit der Austragsöffnung (6) des temperaturfesten Reaktors (2) und deren Austragsseite mit einer Beschichtungsvorrichtung (12) für das neuerliche Beschichten der Körper verbunden ist.

7. Vorrichtung nach Anspruch 6, dadurch gekennzeichnet, daß die Beschichtungsvorrichtung (12) wenigstens eine, vorzugsweise mehrere parallelgeschalte, Beschichtungstrommel(n) enthält.

8. Vorrichtung nach Anspruch 6 oder 7, dadurch gekennzeichnet, daß die Einrichtung (8) zum Abtrennen der Beschichtung als Abreibtrommel oder Schältrommel ausgebildet ist.

9. Vorrichtung nach Anspruch 8, dadurch gekennzeichnet, daß an die Abreibtrommel (8) eine Fördereinrichtung insbesondere ein Sauggebläse (9) angeschlossen ist und daß zur Abscheidung der entfernten Beschichtung mit den gebundenen Schadstoffen ein Zyklon und/oder ein Staubfilter vorgesehen ist.

10. Vorrichtung nach einem der Ansprüche 6 bis 9, dadurch gekennzeichnet, daß für die Förderung der beschichteten Körper im geschlossenen Kreislauf Förderschnecken (7) vorgesehen sind.

11. Vorrichtung nach einem der Ansprüche 6 bis 10, dadurch gekennzeichnet, daß der temperaturfeste Reaktor (2) langgestreckt ausgebildet und im wesentlichen vertikal angeordnet ist, wobei die Aufgabeöffnung für die beschichten Körper nahe dem oberen Ende und die Zuführungsleitung (3) für die zu reinigenden heißen Gase nahe dem unteren Ende angeordnet sind.

12. Vorrichtung nach einem der Ansprüche 6 bis 11, dadurch gekennzeichnet, daß der temperaturfeste Reaktor (2) druckfest ausgebildet ist.

13. Vorrichtung nach Anspruch 12, dadurch gekennzeichnet, daß in die Abführungsleitung des temperaturfesten Reaktors (2) ein regelbares Abzugsorgan eingeschaltet ist.

14. Vorrichtung nach einem der Ansprüche 6 bis 13, daß an oder in der Zuführungsleitung (3) für die heißen Gase zu einem Reaktor (2) und an oder in der Ableitung (4) vom Reaktor (2) wenigstens je ein Sensor (17, 18) für die Erfassung der Gaszusammensetzung angeschlossen ist, daß die Signale der Sensoren einer Auswerteschaltung (19) und einem Komparator zugeführt sind, daß eine Abfördereinrichtung (7) und wenigstens eine Zufördereinrichtung (20) für die beschichteten Körper (5) vorgesehen ist und daß eine mit dem Komparator verbundene Steuerschaltung (19) mit dem Antrieb (21) der Abförder- (7) und/oder Zufördereinrichtungen (20) verbunden ist.

15. Vorrichtung nach Anspruch 14, dadurch gekennzeichnet, daß wenigstens zwei Zufördereinrichtungen (20) für mit unterschiedlicher Beschichtung beschichtete Körper (5) vorgesehen sind, welche gesondert schaltbar mit der Steuerschaltung (19) verbunden sind.

16. Vorrichtung nach Anspruch 14, dadurch gekennzeichnet, daß die Zu- und/oder Abfördereinrichtungen (7, 20) mit einstellbarer Förderleistung ausgebildet sind.

FIG.1

FIG.2